# EUROPEAN PATENT APPLICATION

(11) **EP 3 492 365 A1**
(43) Date of publication of application: **05.06.2019**
(21) Application number: 17205159.1
(22) Date of filing: 04.12.2017
(51) Int. Cl.: B62M 6/90

(54) **CYCLE FRAME**

(71) Applicant: Cycleurope Sverige AB, 432 82 Varberg (SE)
(72) Inventor: ALMQVIST, Christer, 432 54 VARBERG (SE); BENGTSSON, Ulrik, 432 46 VARBERG (SE); REDGERT, Stig, 423 72 SÄVE (SE)
(74) Representative: AWA Sweden AB

(57) **Abstract**

The present invention relates to a cycle frame (10) for an electric bicycle (100) or an electric tricycle, the cycle frame (10) comprising: a down tube (12); a seat tube (14); and a frame element (16) connecting the down tube (12) and the seat tube (14), wherein the frame element (16) comprises a substantially L-shaped battery pack compartment (26) adapted to receive a detachable substantially L-shaped battery pack (28) such that the detachable substantially L-shaped battery pack (28) is at least partly integrated in the cycle frame (10) when received in the substantially L-shaped battery pack compartment (26). The present invention also relates to a battery pack (28), and to an electric bicycle (100) or tricycle.

## Description

### Technical field

The present invention relates to a cycle frame for an electric bicycle or electric tricycle. The present invention also relates to a battery pack adapted to be received in a battery pack compartment of such a cycle frame, and an electric bicycle or tricycle comprising such a cycle frame.

### Background art

An electric bicycle is generally a bicycle with an electric motor which can be used for supporting the human propulsion, which electric motor typically is powered by a battery pack on the bicycle.

The battery pack can for example be arranged behind and along the seat tube of the frame of the electric bicycle, underneath a rear luggage holder of the electric bicycle, or on the down tube of the frame of the electric bicycle.

The battery pack may be arranged outside the frame tubing, like in CN2586647 Y, which discloses an electric bicycle comprising a frame, a saddle, a handle bar, a front wheel, a rear wheel, a battery pack and an electric machine, wherein the frame is composed of the fixed connection of a front beam with a front fork tube, a curved beam, a rear column and a rear fork, and the curved beam is composed of a fore inclined segment and horizontal segment. The rear column in CN2586647 Y presents a post-bending shape and is fixedly connected with a saddle vertical tube, and an L-shaped battery pack is arranged at the rear column position of the horizontal segment of the curved beam.

Alternatively, the battery pack may be disposed integrated in the frame, as disclosed in WO2008106976, wherein the frame is adapted for mounting a battery pack in a frame element extending from crank to crown tube or in a frame element extending from crank to saddle.

### Summary of the invention

It is an object of the present invention to provide an improved cycle frame for an electric bi- or tricycle.

According to a first aspect of the invention, there is provided a cycle frame for an electric bicycle or electric tricycle, the cycle frame comprising: a down tube; a seat tube; and a frame element connecting the down tube and the seat tube, wherein the frame element comprises a substantially L-shaped battery pack compartment adapted to receive a detachable substantially L-shaped battery pack such that the detachable substantially L-shaped battery pack is at least partly integrated in the cycle frame when received in the substantially L-shaped battery pack compartment.

Specifically, the down tube may at one end be connected to a head tube of the cycle frame and at the opposite end or end portion connected to said frame element, wherein the seat tube at one end has an opening adapted to receive a seat post and at the opposite end is connected to said frame element. Namely, the substantially L-shaped battery pack compartment may be positioned at a bottom corner of the cycle frame above a space of the cycle frame adapted to accommodate a bottom bracket or a drive unit.

The present invention is based on the understanding that a detachable substantially L-shaped battery pack can be at least partly integrated in the cycle frame by means of a substantially L-shaped battery pack compartment comprised in a frame element connecting the down tube and the seat tube. As at least partly integrated in the frame, the battery pack gets protection from dirt, and the aesthetics of an electric bi- or tricycle having the present frame is improved, while a low centre of gravity due to the low placement of the battery pack may be achieved. Also, in case the cycle frame is a mono tube step-through bicycle frame, a very low entry step can be maintained due to the L-shape and position of the compartment and battery pack. Also, in case the cycle frame is designed for a centrally positioned electric motor, wiring between the battery pack compartment and the electric motor may be short.

'[S]ubstantially L-shaped' may herein be construed as having the shape of a capital L, as seen from the side, but wherein the usually orthogonal angle between the horizontal portion and the vertical portion of the capital L can be in the range of 90° - 130°, or in the range of 105° - 110°, i.e. a "reclined" capital L.

The substantially L-shaped battery pack compartment may comprise a first portion which is arranged in the same or substantially the same direction as the seat tube, and a second portion which is horizontally or substantially horizontally arranged when the cycle frame is oriented in its intended use orientation. In this way, the battery pack compartment may conveniently fit well with the overall design of the cycle frame. '[S]ubstantially' may here be construed as meaning that the direction may deviate no more than ±10° or ±5°. Furthermore, the angle between the first and second portions may be in the range of 90° - 130°, preferably in the range of 105° - 110°.

In one embodiment, the front of said first portion and the top of said second portion of the substantially L-shaped battery pack compartment are open so as to allow the detachable substantially L-shaped battery pack to be inserted into and removed from the substantially L-shaped battery pack compartment in a plane defined by the down tube and the seat tube. It is appreciated this plane is a vertical plane, when the cycle/frame is upright and not leaning to any side. In this embodiment, the detachable substantially L-shaped battery pack may conveniently be inserted essentially from above, which improves handling.

Furthermore, the substantially L-shaped battery pack compartment may at a foremost end of said second portion have means adapted to hingedly engage corresponding means of a front end of the detachable substantially L-shaped battery pack such that the detachable substantially L-shaped battery pack can be tilted into and out from the substantially L-shaped battery pack compartment. This allows for convenient insertion and removal of the battery pack. Said means can for example be at least one protrusion adapted to removably engage with at least one corresponding recess of the front end of the detachable substantially L-shaped battery pack. The substantially L-shaped battery pack compartment may at an upper end of said first portion have an inclined wall sloping downwards in the backward direction of the cycle frame, to facilitate the insertion/removal.

The back of said first portion and at least some of the bottom of said second portion of the substantially L-shaped battery pack compartment may be closed so as to completely cover the back and cover the bottom of the detachable substantially L-shaped battery pack when the substantially L-shaped battery pack is received in the substantially L-shaped battery pack compartment. This may protect the battery pack from dirt.

Furthermore, the substantially L-shaped battery pack compartment may have two opposite side walls adapted to support and at least partly cover opposite sides of the detachable substantially L-shaped battery pack when the substantially L-shaped battery pack is received in the substantially L-shaped battery pack compartment.

In another embodiment, said frame element comprises a substantially L-shaped side opening adapted to allow the detachable substantially L-shaped battery pack to be inserted into and removed from the substantially L-shaped battery pack compartment from the side. The side opening is typically arranged on the left side of the cycle frame, to facilitate insertion/removal.

The cycle frame may be a monotube step-through frame, which has only one down tube but no top tube. Alternatively, the cycle frame may be a so-called diamond frame with a (high) top tube, for example.

According to a second aspect of the invention, there is provided a substantially L-shaped battery pack, which substantially L-shaped battery pack may be adapted to be received in a substantially L-shaped battery pack compartment of a cycle frame according to the first aspect. This aspect may exhibit the same or similar features and technical effects as the first aspect, and vice versa.

The substantially L-shaped battery pack may further comprise a power outlet, for example a USB port. To this end, the substantially L-shaped battery pack may also be used as a standalone power bank, i.e. when not in the frame.

According to a third aspect of the invention, there is provided an electric bicycle or tricycle comprising a cycle frame according to the first aspect. This aspect may exhibit the same or similar features and technical effects as the first and/or second aspect(s), and vice versa.

### Brief description of the drawings

These and other aspects of the present invention will now be described in more detail, with reference to the appended drawings showing one or more embodiments of the invention.
Fig. 1 is a side view of an electric bicycle comprising a bicycle frame according to an embodiment of the present invention with a battery pack received in a battery pack compartment of the bicycle frame.
Fig. 2 is a close-up side view of the bicycle and bicycle frame of fig. 1.
Fig. 3 is a partial perspective view of the bicycle frame of fig. 1 with the battery pack removed/detached from the battery pack compartment.
Fig. 4 is a side view illustrating insertion/removal of the battery pack of fig. 1.
Figs. 5a-b are perspective views of a battery pack for the frame of fig. 1.
Fig. 5c is a side view of the battery pack of figs. 5a-b placed in a charging dock.
Figs. 6a-b are left and right side views of an electric bicycle comprising a bicycle frame according to another embodiment of the present invention.
Fig. 7 is a partial perspective view of the bicycle frame of figs. 6a-b.
Fig. 8 is a side view of an electric bicycle comprising a bicycle frame according to a variant of fig. 1.

### Detailed description

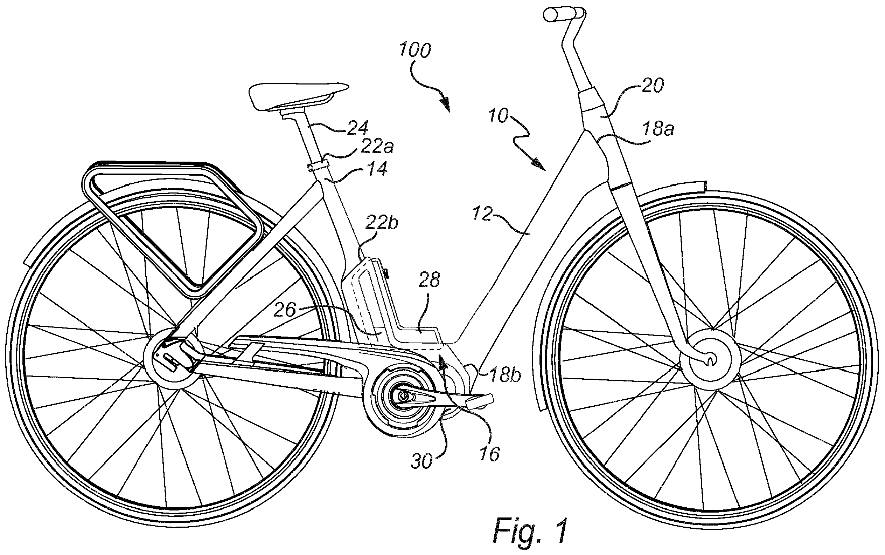

Fig. 1 is a side view of an electric bicycle 100 comprising a cycle frame, namely a bicycle frame 10, according to an embodiment of the present invention.

The illustrated bicycle frame 10 is a step-through frame, also referred to as "women's bicycle frame". In particular, the illustrated bicycle frame 10 is a monotube step-through frame, comprising a single down tube 12 and no top tube. The illustrated bicycle frame 10 also comprises a seat tube 14. The seat tube 14 is typically cylindrical, whereas the down tube 12 may have a non-circular cross-section. The bicycle frame 10 may for example be made of steel, carbon, aluminium or titanium, typically alloy(s) thereof.

The bicycle frame 10 further comprises a frame element 16 connecting the down tube 12 and the seat tube 14. Specifically, the down tube 12 is at one end 18a connected to a head tube 20 of the bicycle frame 10 and at the opposite end 18b connected to the frame element 16, wherein the seat tube 14 at one end 22a has an opening adapted to receive a seat post 24 and at the opposite end 22b is connected to the frame element 16. The frame element 16 may for example be connected to the down tube 12 and the seat tube 14 by means of welding.

Apart from the aforementioned, the bicycle frame 10 may further comprise chain stays and seat stays, and the electric bicycle 100 may further comprise a front fork, two wheels, a handlebar, pedals, etc.

According to the present invention, the frame element 16 comprises a substantially L-shaped battery pack compartment 26. The substantially L-shaped battery pack compartment 26 is adapted to receive a detachable substantially L-shaped battery pack 28, such that the detachable substantially L-shaped battery pack 28 is at least partly integrated in the bicycle frame 10 when the detachable substantially L-shaped battery pack 28 is received in the substantially L-shaped battery pack compartment 26, as illustrated for example in fig. 1.

As can be seen for example in fig. 1, the substantially L-shaped battery pack compartment 26 is generally positioned at a bottom corner of the bicycle frame 10 just above a space of the bicycle frame 10, which space here is adapted to accommodate a centrally positioned drive unit 30 mounted under the frame element 16. The drive unit 30 may for example come from the EGOING system used for example by Crescent.

The substantially L-shaped battery pack 28 is adapted to power an electric motor of the electric bicycle 100. The electric motor is used for (assisted) propulsion of the electric bicycle 100. The electric motor may have a power of 250 W. The maximum speed of the electric bicycle 100 as propelled by the electric motor may for example be 25 km/h. In fig. 1, the electric motor is included in the drive unit 30.

The substantially L-shaped battery pack compartment 26 comprises a first portion 32a which is arranged in the same or substantially the same direction as the seat tube 14, and in the downwards extension of the seat tube 14. The substantially L-shaped battery pack compartment 16 further comprises a second portion 32b which is horizontally or substantially horizontally arranged when the bicycle frame 10 is oriented in its intended use orientation (fig. 1). The angle A between the first and second portions 32a-b may be in the range of 90° - 130°, preferably in the range of 105° - 110°, for example 108°. The second portion 32b may be a lower portion, and the first portion 32a may extend upwards (and slightly backwards) from the rear of the second portion 32b.

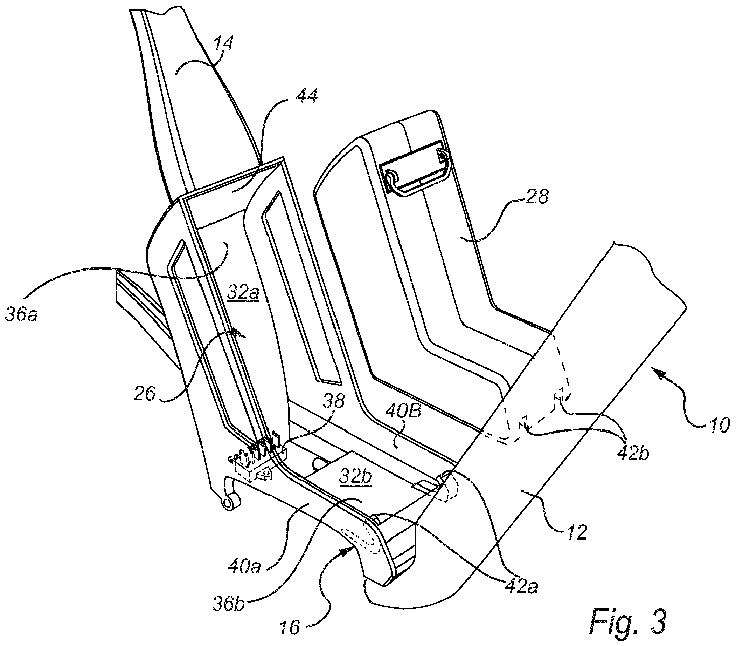

In figs. 1-4, the front 34a of the first portion 32a and the top 34b of the second portion 32b of the substantially L-shaped battery pack compartment 26 are open, so as to allow the detachable substantially L-shaped battery pack 28 to be inserted into and removed from the substantially L-shaped battery pack compartment 26 in a plane B defined by the down tube 12 and the seat tube 14, as described further below. Also, the back 36a of the first portion 32a and some of the bottom 36b of the second portion 32b are closed. The back 36a may be a back plate. The back 36a of the first portion 32a of the substantially L-shaped battery pack compartment 26 may completely cover the back of the detachable substantially L-shaped battery pack 28 when the latter is received in the substantially L-shaped battery pack compartment 26, and the bottom 36b of the second portion 32b of the substantially L-shaped battery pack compartment 26 may alone or in combination with the underlying drive unit 30 completely cover the bottom of the detachable substantially L-shaped battery pack 28. Electrical contact means 38 for electrical connection to the detachable substantially L-shaped battery pack 28 may for example be arranged on or in the bottom 36b. Furthermore, wiring (not shown) may be provided between the electrical contact means 38 and the electric motor of the drive unit 30. Furthermore, the substantially L-shaped battery pack compartment 28 has two opposite side walls 40a-b adapted to support and in figs. 1-4 partly cover opposite sides of the detachable substantially L-shaped battery pack 28 when the latter is received in the substantially L-shaped battery pack compartment 26. The side walls 40a-b may be substantially L-shaped. The side walls 40a-b in for example fig. 3 have openings, but the side walls 40a-b could have other designs. It is appreciated that the detachable substantially L-shaped battery pack 28 here is partly integrated or "semi-integrated" in the bicycle frame 10, in that some of the battery pack 28 extends outside the bicycle frame 10 when received in the substantially L-shaped battery pack compartment 26, while the rest is inside the bicycle frame 10 and concealed by the bicycle frame 10. Depending e.g. on the design of the side walls 40a-b, for example about 20-80% of the detachable substantially L-shaped battery pack 28 may be concealed by the bicycle frame 10, as seen from the side.

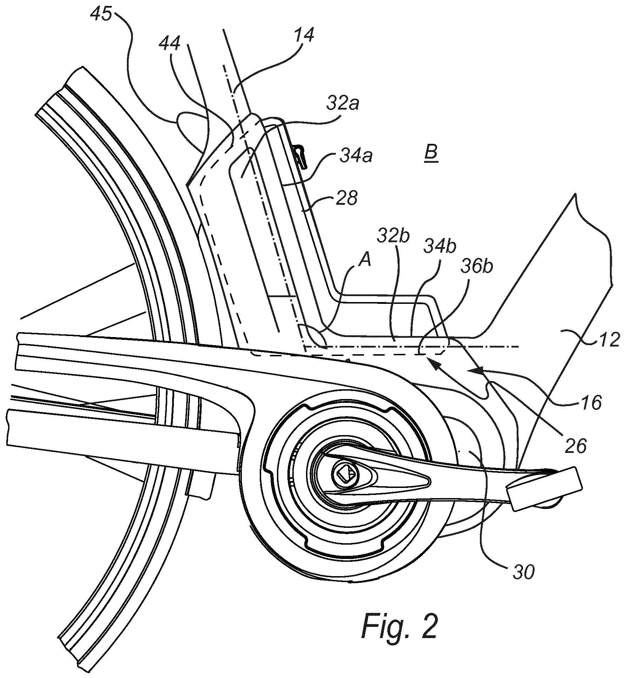

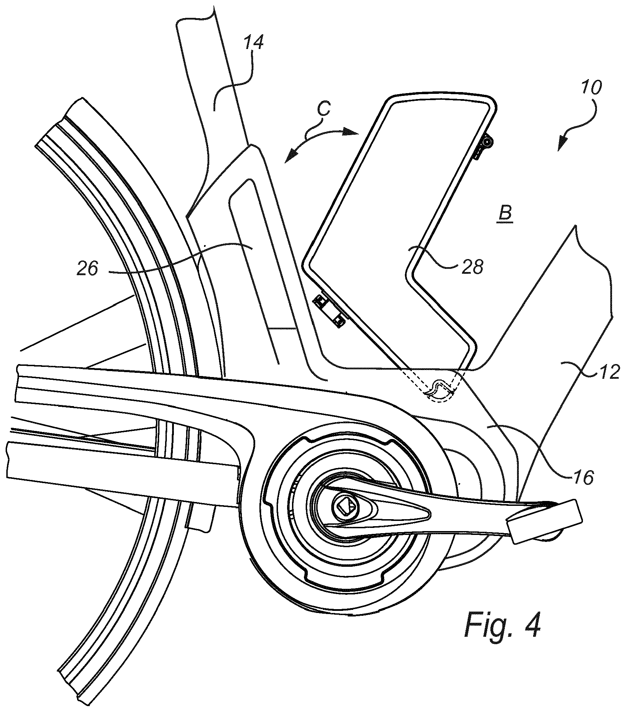

The substantially L-shaped battery pack compartment 26 may at a foremost end of the second portion 32b have means 42a adapted to hingedly engage corresponding means 42b of a front end of the detachable substantially L-shaped battery pack 28, such that the detachable substantially L-shaped battery pack 28 can be tilted into and out from the substantially L-shaped battery pack compartment 26, as illustrated by arrow C in fig. 4. The means 42a-b can for example be dual protrusions 42a adapted to removably engage with corresponding dual recesses 42b of the front end of the detachable substantially L-shaped battery pack 28. Furthermore, the substantially L-shaped battery pack compartment 26 may at an upper end of the first portion 32a have an inclined wall 44 sloping downwards in the backward direction of the bicycle frame 10, to facilitate the insertion/removal of the detachable substantially L-shaped battery pack 28. Hence, when inserting the detachable substantially L-shaped battery pack 28, a user may first insert the front end of the detachable substantially L-shaped battery pack 28 so that the recesses 42b engages the protrusions 42a (fig. 4), whereafter the detachable substantially L-shaped battery pack 28 is tilted downwards/backwards in the aforementioned plane B until it is received in the substantially L-shaped battery pack compartment 26 as illustrated in figs. 1 and 2. In other words, the detachable substantially L-shaped battery pack 28 may be tilted about a rotation axis at the means 42a-b, which rotation axis is perpendicular to plane B. Likewise, when removing the detachable substantially L-shaped battery pack 28, the user may tilt it upwards/forward in plane B about the means 42a-b to the position and orientation of fig. 4, whereafter the detachable substantially L-shaped battery pack 28 can be completely removed from the substantially L-shaped battery pack compartment 26, for example for re-charging.

The frame element 16 may further comprise locking means 45 adapted to lock the detachable substantially L-shaped battery pack 28 in the substantially L-shaped battery pack compartment 26. The locking means 45 may be placed on an upper portion of the frame element 16 and behind the seat tube 14, as shown in figures 1-2, to facilitate access to the locking means 45 for the user. The locking means 45 may be adapted to automatically lock the detachable substantially L-shaped battery pack 28 when the detachable substantially L-shaped battery pack 28 is tilted downwards/backwards and received in the substantially L-shaped battery pack compartment 26, as described above. To this end, the locking means 45 may comprise a spring loaded lock cylinder. The locking means 45 may then be unlocked by a key.

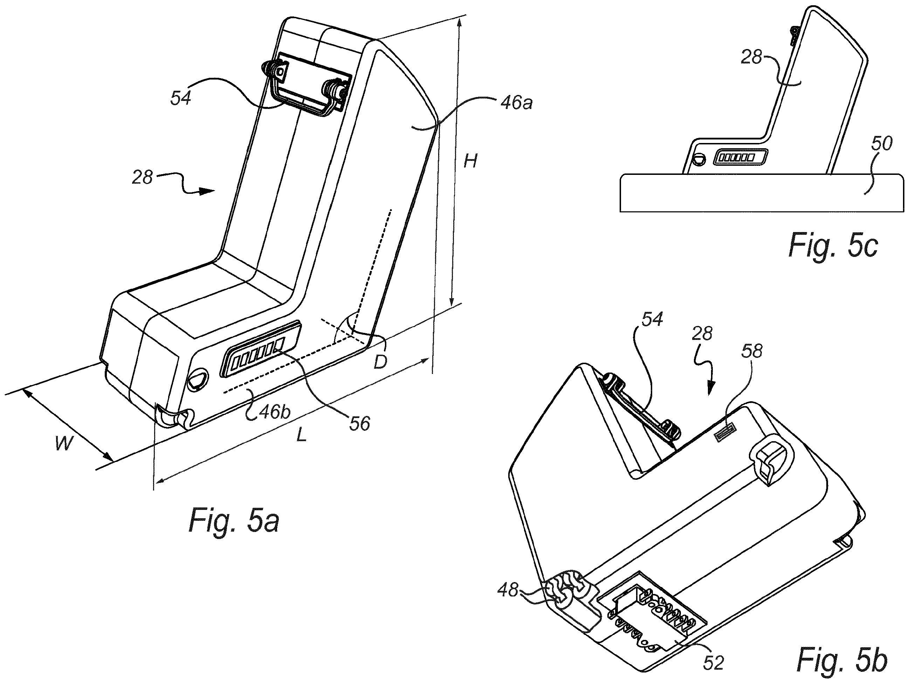

The detachable substantially L-shaped battery pack 28 is illustrated in figs. 5a-b. The shape and size the detachable substantially L-shaped battery pack 28 may at least party match the shape and size of the substantially L-shaped battery pack compartment 26. To this end, the substantially L-shaped battery pack 28 has two portions 46a-b, and the angle D between the first and second portions 46a-b may be in the range of 90° - 130°, preferably in the range of 105° - 110°, for example 108°, i.e. the same as angle A. When the detachable substantially L-shaped battery pack 28 is properly received in the substantially L-shaped battery pack compartment 26, the second portion 46b may be a lower (and typically horizontal) portion, and the first portion 46a may extend upwards (and slightly backwards) from the rear of the second portion 46b. The height H of the detachable substantially L-shaped battery pack 28 may be in the range of 170-220 mm, for example 204 mm. The length L of the detachable substantially L-shaped battery pack 28 may be in the range of 200-220 mm, for example 205 mm. The length of the second portion 46b may be in the range of 150-170 mm, for example 161 mm. The height H of the detachable substantially L-shaped battery pack 28 may be greater than the length of the second portion 46b. The width W of the detachable substantially L-shaped battery pack 28 may be in the range of 60-100 mm, for example 76 mm. The width W of the detachable substantially L-shaped battery pack 28 may be uniform. The sides of the detachable substantially L-shaped battery pack 28 may be flat. The top of the first portion 46a may be inclined, to match the inclined wall 44.

The detachable substantially L-shaped battery pack 28 may comprise a plurality of a battery elements 48 arranged inside it. The detachable substantially L-shaped battery pack 28 may for example comprise forty battery elements 48. The battery elements 48 may be cylindrical cells. The battery elements 48 may be oriented in the width direction W, as indicated in fig. 5b. The battery elements/detachable substantially L-shaped battery pack 28 may be rechargeable. The detachable substantially L-shaped battery pack 28 may for example be changed using a (desktop) charging dock 50, see fig. 5c. The detachable substantially L-shaped battery pack 28 may have a capacity in the range of 8-15 Ah, for example 8.8 Ah or 11 Ah or 14 Ah.

The detachable substantially L-shaped battery pack 28 may have electrical contact means 52 matching the electrical contact means 38 of the substantially L-shaped battery pack compartment 26. The electrical contacts means 52 may for example be arranged on or in the bottom of the detachable substantially L-shaped battery pack 28, as illustrated in fig. 5b. The detachable substantially L-shaped battery pack 28 may comprise a handle 54. The handle 54 may be arranged on portion 46a. The detachable substantially L-shaped battery pack 28 may comprise a charging indicator 56 adapted to visually indicate the current state of charge of the detachable substantially L-shaped battery pack 28. The detachable substantially L-shaped battery pack 28 may comprise a power outlet 58, for example a USB (Universal Serial Bus) port. By means of the power outlet 58, the detachable substantially L-shaped battery pack 28 can for example be used to charge a smart phone or the like. The power outlet 58 is operable also when the detachable substantially L-shaped battery pack 28 is not received in the compartment 26 of the bicycle frame 10. Hence, the detachable substantially L-shaped battery pack 28 may also be used as a portable power bank.

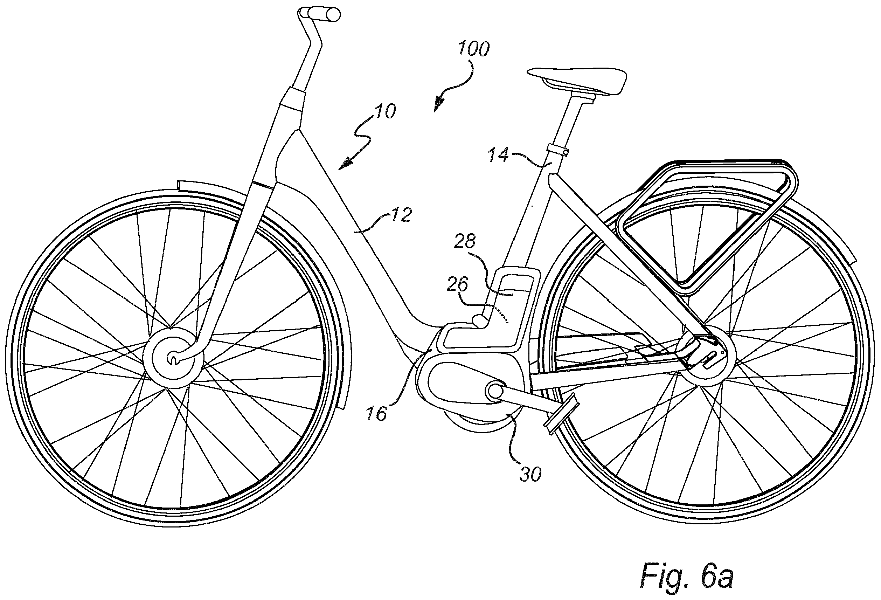

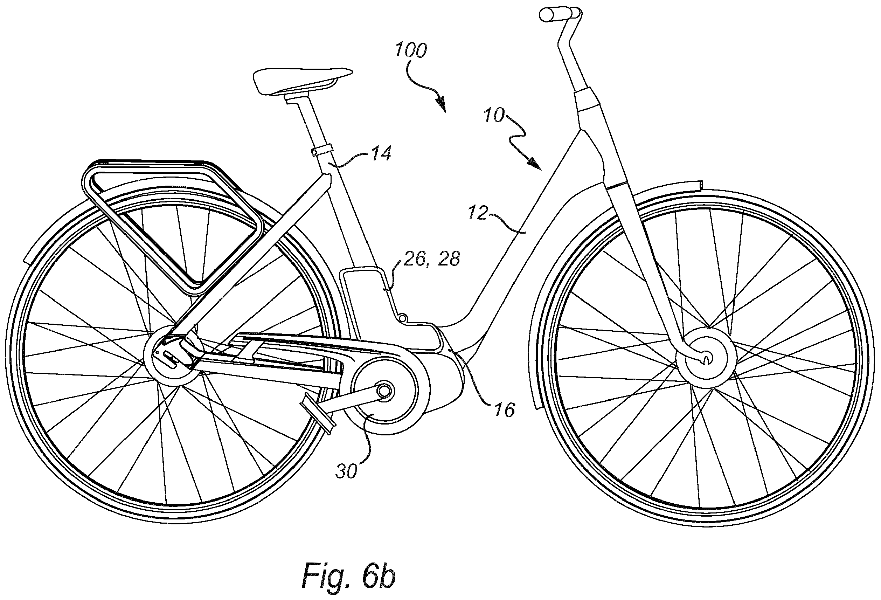

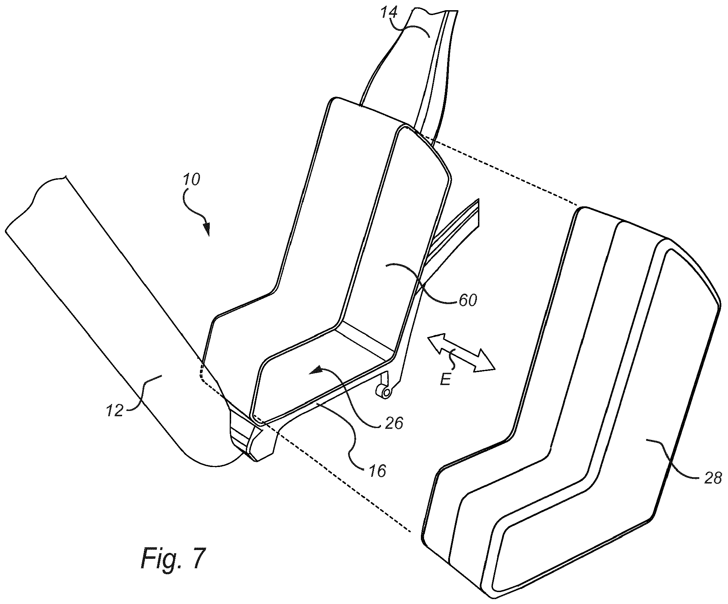

Figs. 6a-b and 7 illustrate an electric bicycle 100 comprising a bicycle frame 10 according to another embodiment of the present invention. In comparison to the embodiment of figs. 1-4, the frame element 16 here comprises a substantially L-shaped side opening 60 adapted to allow the detachable substantially L-shaped battery pack 28 to be inserted into and removed from the substantially L-shaped battery pack compartment 26 from the side, as illustrated by arrow E in fig. 7. The remaining sides/faces of the substantially L-shaped battery pack compartment 26 may be closed. The side opening 60 is arranged on the left side of the bicycle frame 10, and it may beneficially match the profile/side-face of the detachable substantially L-shaped battery pack 28.

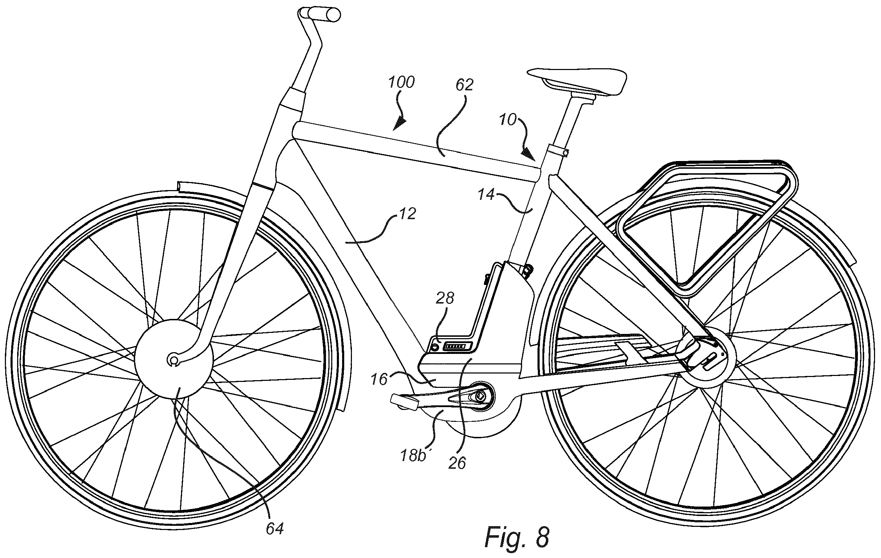

The person skilled in the art realizes that the present invention by no means is limited to the preferred embodiments described above. On the contrary, many modifications and variations are possible within the scope of the appended claims. For example, instead of a monotube step-through frame, the substantially L-shaped battery pack compartment 26 could be applied to a diamond frame with a top tube 62 (fig. 8). The embodiment of figs. 6a-b and 7 could also be applied to a dual-tube step-through frame. Furthermore, the present invention could be used with a front wheel electric motor 64 (fig. 8, wherein end portion 18b' of down tube 12 is connected to frame element 16) and/or a rear wheel electric motor instead of a centrally positioned electric motor. Furthermore, the present invention could be applied to a tricycle frame and electric tricycle, i.e. a cycle with three wheels.

## Claims

1. A cycle frame (10) for an electric bicycle (100) or an electric tricycle, the cycle frame (10) comprising:
a down tube (12);
a seat tube (14); and
a frame element (16) connecting the down tube (12) and the seat tube (14), wherein the frame element (16) comprises a substantially L-shaped battery pack compartment (26) adapted to receive a detachable substantially L-shaped battery pack (28) such that the detachable substantially L-shaped battery pack (28) is at least partly integrated in the cycle frame (10) when received in the substantially L-shaped battery pack compartment (26).

2. A cycle frame according to claim 1, wherein the down tube at one end (18a) is connected to a head tube (20) of the cycle frame and at the opposite end (18b) or end portion connected to said frame element, and wherein the seat tube at one end (22a) has an opening adapted to receive a seat post (24) and at the opposite end (22b) is connected to said frame element.

3. A cycle frame according to claim 1 or 2, wherein substantially L-shaped battery pack compartment is positioned at a bottom corner of the cycle frame above a space of the cycle frame adapted to accommodate a bottom bracket or a drive unit (30).

4. A cycle frame according to any preceding claim, wherein the substantially L-shaped battery pack compartment comprises a first portion (32a) which is arranged in the same or substantially the same direction as the seat tube, and a second portion (32b) which is horizontally or substantially horizontally arranged when the cycle frame is oriented in its intended use orientation.

5. A cycle frame according to claim 4, wherein the angle (A) between the first and second portions is in the range of 90° - 130°, preferably in the range of 105° - 110°.

6. A cycle frame according to claim 4 or 5, wherein the front (34a) of said first portion and the top (34b) of said second portion of the substantially L-shaped battery pack compartment are open so as to allow the detachable substantially L-shaped battery pack to be inserted into and removed from the substantially L-shaped battery pack compartment in a plane (B) defined by the down tube and the seat tube.

7. A cycle frame according to claim 6, wherein the substantially L-shaped battery pack compartment at a foremost end of said second portion has means (42a) adapted to hingedly engage corresponding means (42b) of a front end of the detachable substantially L-shaped battery pack such that the detachable substantially L-shaped battery pack can be tilted into and out from the substantially L-shaped battery pack compartment.

8. A cycle frame according to claim 6 or 7, wherein the substantially L-shaped battery pack compartment at an upper end of said first portion has an inclined wall (44) sloping downwards in the backward direction of the cycle frame.

9. A cycle frame according to any one of the preceding claims 4-8, wherein the back (36a) of said first portion and at least some of the bottom (36b) of said second portion of the substantially L-shaped battery pack compartment are closed so as to completely cover the back and cover the bottom of the detachable substantially L-shaped battery pack when the substantially L-shaped battery pack is received in the substantially L-shaped battery pack compartment.

10. A cycle frame according to any preceding claim, wherein the substantially L-shaped battery pack compartment has two opposite side walls (40a-b) adapted to support and at least partly cover opposite sides of the detachable substantially L-shaped battery pack when the substantially L-shaped battery pack is received in the substantially L-shaped battery pack compartment.

11. A cycle frame according to any one of the preceding claims 1-5, wherein said frame element comprises a substantially L-shaped side opening (60) adapted to allow the detachable substantially L-shaped battery pack to be inserted into and removed from the substantially L-shaped battery pack compartment from the side.

12. A cycle frame according to any preceding claim, wherein the cycle frame is a monotube step-through frame.

13. A cycle frame according to any preceding claim, in combination with the detachable substantially L-shaped battery pack (28).

14. A substantially L-shaped battery pack (28) adapted to be received in a substantially L-shaped battery pack compartment (26) of a cycle frame (10) according to any one of the preceding claims 1-12.

15. A substantially L-shaped battery pack according to claim 14, further comprising a power outlet (58).

16. Use of the substantially L-shaped battery pack according to claim 15 as a standalone power bank.

17. An electric bicycle (100) or tricycle comprising a cycle frame (10) according to any one of the preceding claims 1-13.
